# EUROPEAN PATENT SPECIFICATION

(11) **EP 1 104 066 B1**
(45) Date of publication and mention of the grant of the patent: **17.06.2009**
(21) Application number: 00500239.9
(22) Date of filing: 20.11.2000
(51) Int. Cl.: H02G 3/12

(54) **A box for the installation of electrical apparatus in a raceway for electrical cables**
Dose zur Installation eines elektrischen Geräts in einem Kabelführungskanal
Boîte d'installation d'appareillage électrique dans une goulotte pour câbles électriques

(30) Priority: 24.11.1999 ES 9902973 U
(43) Date of publication of application: 30.05.2001
(73) Proprietor: Unex Aparellaje Electrico S.L., 08903 L'Hospitalet de Llobregat (Barcelona) (ES)
(72) Inventor: Benito Navazo, Juan Manuel, 08190 Sant Cugat del Valles (Barcelona) (ES)
(74) Representative: Curell Aguilà, Marcelino

(56) References cited:
- EP-A- 0 391 713
- EP-A- 0 465 077
- WO-A-90/09692
- DE-A- 3 643 559
- DE-U- 29 722 471

## Description

This invention relates to a box for the installation of electrical apparatus in a raceway for electrical cables, which box is organized in such a way that, once it has been fitted in the raceway, the electrical apparatus has been mounted therein and has been electrically connected, it is provided with means allowing it to be locked in place in the raceway, making sliding thereof longitudinally along the raceway impossible.

In particular, this box includes means for fixation thereof in a raceway for electrical cables, especially a raceway of the type formed by the association of a base section and a cover section, formed by extrusion of a thermoplastic insulating material, in which the base section is provided longitudinally on the inside of the edges of the walls thereof with overhanging shaped tubular beads, each of which is formed with an upper longitudinal groove for engagement with ribs provided on the cover section, and a lower inverted spine opposite said groove.

With the purpose of holding the electrical apparatus assembly box immobile in the raceway and, particularly, in the longitudinal direction of the latter, solutions have been adopted based on screwing the box to the raceway, which required drilling operations on the raceway, in the arrangement of auxiliary abutment members, which makes the product and the assembly operation more expensive, and other fixing arrangements, none of which has been effective.

EP-A-0391713 (ELECTRAK) discloses a trunking assembly for electrical cables comprising a channel section provided with rails and a backing box which can be fixed to said rails of the channel section by means of a snap-fitting clamping ring, allowing longitudinal adjustment along the rails to be acheived prior to locking the box in position. DE-U-29722471 (ACKERMANN) discloses a similar assembly, in which clamping of the rails is performed by means of screws.

Under these circumstances, it would be desirable to have an electrical apparatus assembly box which, by way of a peculiar organization of the normal elements thereof, allowed it to be held immobile in the raceway in a simple, direct way.

In accordance with the foregoing ideas, the solution of providing the assembly box with means for fixation to the raceway, based on systems of pressing the box against the raceway, has been adopted.

According to the foregoing solution, the invention describes a box for the installation of electrical apparatus in a raceway for electrical cables comprising the features of claim 1.

A further embodiment of the invention resides in the fact that the means provided in the lower portion for the seating thereof on the inverted spines of the shaped beads of the base section of the raceway are formed by respective barb-like projections which are disposed on opposite surfaces of the lower portion which are parallel to the walls of said base section and have a surface parallel to the surface of the upper portion.

Yet a further embodiment of the invention resides in the fact that the means for the mutual association of the upper and lower portions which determine their mutual moving together and the clamping of the shaped beads therebetween are formed by self-tapping screws which pass through respective holes in the upper portion and penetrate firmly in blind holes provided in the walls of the lower portion, both in those which contain the barb-like projections and in the remaining ones disposed crosswise relative to the raceway

A further embodiment of the invention envisages that the upper portion has respective closure skirts on two opposite sides which overlap the outer surfaces of the walls of the box which are crosswise relative to the raceway.

To facilitate the understanding of the foregoing ideas, there is described hereinafter the subject matter of the invention with reference to the accompanying drawings, in which:
Figure 1 is a front elevation view of a box for the assembly of electrical apparatus engaged in a raceway for electrical cables, in which the right-hand half of the box has been shown in cross section, and which may slide lengthwise of the raceway, since it is only suspended from the shaped tubular beads of the raceway;
Figure 2 shows the ensemble of the previous figure in which the box is locked in the raceway by clamping on the shaped tubular beads;
Figure 3 is an exploded perspective view of a preferred embodiment of the box for the assembly of electrical apparatus according to the invention;
Figure 4 is a cross section view of a detail of the means for locking the box to the raceway in an inoperative position;
Figure 5 is a view similar to the previous figure in which the means for locking the box to the raceway are in the operative position thereof.

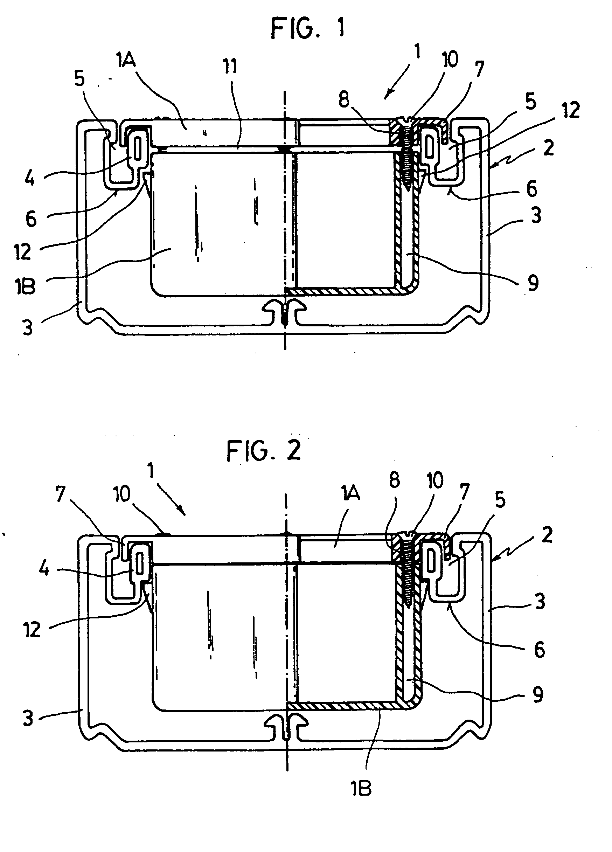

As may be seen in Figures 1 through 3, the object of the invention is a box 1 which is devised to be mounted in the base section 2 of a raceway having longitudinally on the inside of the edges of the walls 3 overhanging shaped tubular beads 4, each of which is formed with an upper longitudinal groove 5 in which there are engaged the ribs or wings of the corresponding cover section, not shown, and a lower inverted spine 6 opposite said groove 5.

The box 1, according to Figures 1 and 2, is constituted by an upper portion 1A, which may be fitted by means of elbowed tabs 7 in the grooves 5 of the shaped tubular beads 4 of the base section 2 of the raceway and which is provided with conventional means, to be described in detail hereinafter, for fixing the electrical apparatus and for association with a lower portion 1 B, which are formed by through holes 8 in the upper portion 1A and blind holes 9 in the lower portion 1B associated together with self-tapping screws 10. The lower portion 1B, located below said upper portion 1A with a slight clearance 11 therebetween, is provided with seating means 12 engaging the lower inverted spines 6 of said shaped tubular beads 4.

As may be seen in Figure 1, the upper portion 1A and the lower portion 1B of the box 1 are connected together by the self-tapping screws 10, while maintaining the clearance 11, whereby the box 1 may slide along the base section 2. However, as may be seen in Figure 2, once the self-tapping screws 10 have been tightened, after mounting the electrical apparatus, not shown, the clearance 11 is reduced and the shaped tubular beads 4 are clamped between the elbowed tabs 7 and the seating means 12, whereby the box 1 is totally fixed in the base section 2 of the raceway.

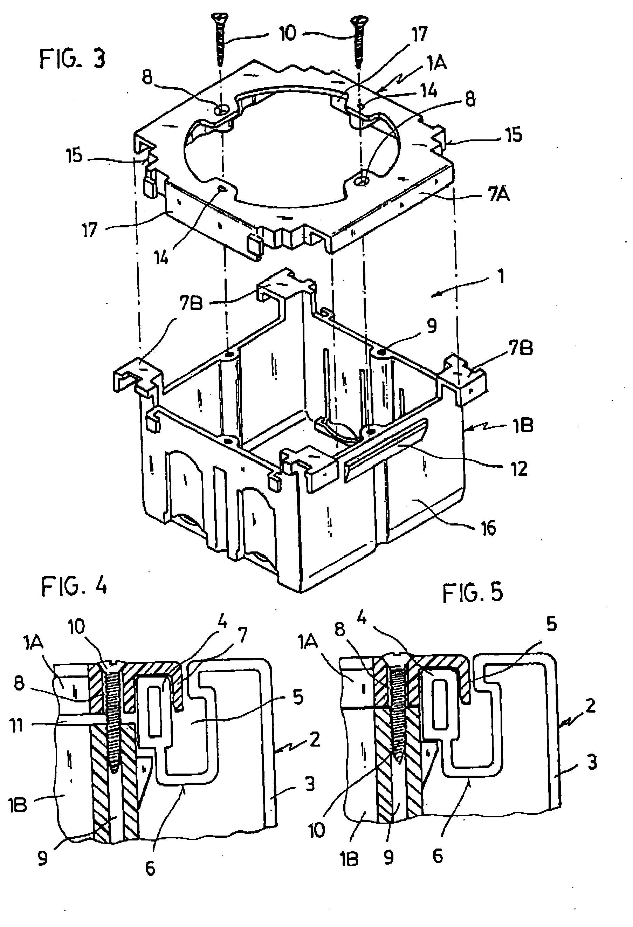

Figure 3 shows a preferred embodiment of the box 1, which is formed, in a like fashion to Figures 1 and 2, by an upper portion 1A which, in frame-like fashion, comprises means 14 for attachment of the electrical apparatus and of elbowed tabs 7A for engagement in the grooves 5 of the shaped tubular beads 4, and a lower portion 1B which is suspended below the upper portion 1A and forms the box proper for the protection of the electrical apparatus and is provided with elbowed tabs 7B for engagement in the grooves 5, with seating means 12 and blind holes 9 for connection with the upper portion 1A and for fixing the electrical apparatus by way of the self-tapping screws 10.

The upper portion 1A in the embodiment of Figure 3 has the corners 15 thereof cut away to allow for the passage of the elbowed tabs 7B of the lower portion 1B and also allow the engagement thereof in the base section 2 of the raceway.

On the other hand, the seating means 12 provided on the lower portion 1B are formed, in all cases, by respective barb-like projections which are disposed oppositely on the surfaces 16 which are parallel to the walls of the base section 2 and are provided with a surface parallel to the upper portion 1A.

It is envisaged that the upper portion 1A be provided on two opposite sides disposed crosswise relative to the base section 2 of the raceway with respective skirts 17 which overlap the surfaces 16 of the lower portion 1 B.

Figures 4 and 5 show, on a larger scale, the means of the upper portion 1A and lower portion 1B which provide for the gripping of the ensemble on the shaped tubular beads 4 of the base section 2 of the raceway.

## Claims

1. A box for the installation of electrical apparatus in a raceway for electrical cables, said box including means for fixation thereof in said cable raceway, said raceway being of the type formed by the association of a base section (2) and a cover section, formed by extrusion of a thermoplastic insulating material, in which said base section (2) is provided longitudinally on the inside of the edges of the walls thereof with overhanging shaped tubular beads (4), each of which is formed with an upper longitudinal groove (5) for engagement with ribs provided on the cover section, and a lower inverted spine (6) opposite said groove (5), said box being formed by an upper portion (1A) which is shaped in a frame-like fashion and a lower portion (1B) which is suspended with a slight clearance (11) under the said upper portion (1A) and serves as protection for said electrical apparatus, said upper portion (1A) comprising engagement means (7, 7A) for engaging in said grooves (5) of said shaped tubular beads (4) of said base section (2) and being provided with means (14) for attachment of the electrical apparatus and means (8) for association with said lower portion (1B), said lower portion (1B) being provided with means (12) for seating on said inverted spines (6) of said shaped tubular beads (4) and with mating means (9) of association with said upper portion (1A) which determine the moving together of said upper portion (1A) and said lower portion (1B) and the clamping of said shaped tubular beads (4) between said upper portion (1 A) and said lower portion (1B); **characterized in that** said lower portion (1B) is provided with engagement means (7B) for engaging in said grooves (5) of said shaped tubular beads (4) of said base section (2), and said upper portion (1A) has the corners (15) thereof cut away for the passage of said engagement means (7B) provided on said lower portion (1B).

2. A box according to claim 1, **characterized in that** said upper portion (1A) has two closure skirts (17) on two opposite sides, said skirts (17) overlapping the outer surfaces of two opposite walls of said lower portion (1B) of the box which are crosswise relative to the base section (2) of the raceway.

## Patentansprüche

1. Dose zur Installation eines elektrischen Geräts in einem Kabelführungskanal, wobei die Dose Mittel zum Befestigen der Dose in dem Kabelführungskanal aufweist und der Kabelführungskanal in der Art ausgebildet ist, dass er einen Grundabschnitt (2) und einen Deckelabschnitt hat, die durch Extrusion eines thermoplastischen Isoliermaterials geformt sind,
bei der der Grundabschnitt (2) in Längsrichtung auf der Innenseite der Wandkanten mit überhängend geformten rohrförmigen Wulstabschnitten (4) versehen ist, von denen jeder eine obere Längsnut (5) zum Eingriff von an dem Deckelabschnitt vorgesehenen Rippen hat, und mit einem unteren umgekehrten Brückenabschnitt (6) gegenüber der Nut (5) versehen ist,
bei der die Dose ein rahmenartig ausgebildetes Oberteil (1A) und ein Unterteil (1 B) aufweist, das mit einem geringen Spiel (11) unter dem Oberteil (1A) aufgehängt ist und als Schutz für das elektrische Gerät dient, wobei das Oberteil (1A) Eingriffsmittel (7, 7A) zum Eingreifen in die Nuten (5) der geformten rohrförmigen Wulstabschnitte (4) des Grundabschnittes (2) aufweist und Mittel (14) zum Befestigen des elektrischen Geräts und Mittel (8) zur Zuordnung zu dem Unterteil (1B) hat, und wobei das Unterteil (1B) Mittel (12) zum Einsetzen der umgekehrten Brückenabschnitte (6) der geformten rohrförmigen Wulstabschnitte (4) sowie Aufnahmemittel (9) für das Oberteil (1A) hat, die das Zusammenbewegen des Oberteils (1A) und des Unterteils (1 B) und das Festklemmen der rohrförmigen Wulstabschnitte (4) zwischen dem Oberteil (1A) und dem Unterteil (1 B) bestimmen;
**dadurch gekennzeichnet, dass**
das Unterteil (1 B) mit Angriffsmitteln (7B) zum Eingreifen in die Nuten (5) der geformten rohrförmigen Wulstabschnitte (4) des Grundabschnittes (2) versehen ist und dass bei dem Oberteil (1A) die Ecken (15) ausgeschnitten sind zum Durchführen der auf dem Unterteil (1 B) angeordneten Angriffsmittel (7B).

2. Dose nach Anspruch 1, **dadurch gekennzeichnet, dass** das Oberteil (1A) auf zwei einander gegenüber liegenden Seiten zwei Verschlussschürzen (17) hat, die die Außenflächen von zwei gegenüberliegenden Seiten des Unterteils (1 B) der Dose überlappen und zum Grundabschnitt (2) des Kabelführungskanals quer verlaufen.

## Revendications

1. Boîtier pour l'installation d'un dispositif électrique dans un chemin de câbles pour des câbles électriques, ledit boîtier comprenant des moyens pour sa fixation dans ledit chemin de câbles, ledit chemin de câbles étant du type formé par l'association d'une section de base (2) et d'une section de capot, formées par l'extrusion d'un matériau thermoplastique isolant, dans lequel ladite section de base (2) est pourvue longitudinalement sur l'intérieur des bords de ses parois de bourrelets (4) de forme tubulaire en surplomb, chacun d'eux comportant une rainure longitudinale supérieure (5) pour une mise en prise avec des nervures prévues sur la section de capot, et une crête inversée inférieure (6) face à ladite rainure (5), ledit boîtier étant formé par une partie supérieure (1A) qui est réalisée sous la forme d'un cadre et une partie inférieure (1B) qui est suspendue avec un léger jeu (11) sous ladite partie supérieure (1A) et qui sert de protection pour ledit dispositif électrique, ladite partie supérieure (1A) comprenant des moyens d'engagement (7, 7A) destinés à s'engager dans lesdites rainures (5) desdits bourrelets de forme tubulaire (4) de ladite section de base (2) et étant pourvue de moyens (14) pour la fixation du dispositif électrique et de moyens (8) pour une association avec ladite partie inférieure (1B), ladite partie inférieure (1B) étant pourvue de moyens (12) pour venir en appui sur lesdites crêtes inversées (6) desdits bourrelets de forme tubulaire (4) et de moyens d'accouplement (9) d'association avec ladite partie supérieure (1A) qui déterminent le déplacement de ladite partie supérieure (1A) et de ladite partie inférieure (1B) l'une avec l'autre et le serrage desdits bourrelets de forme tubulaire (4) entre ladite partie supérieure (1A) et ladite partie inférieure (1B) ; **caractérisé en ce que** ladite partie inférieure (1B) est pourvue de moyens d'engagement (7B) destinés à s'engager dans lesdites rainures (5) desdits bourrelets de forme tubulaire (4) de ladite section de base (2), et ladite portion supérieure (1A) a des coins (15) qui sont découpés pour le passage desdits moyens d'engagement (7B) prévus sur ladite partie inférieure (1B).

2. Boîtier selon la revendication 1, **caractérisé en ce que** ladite partie supérieure (1A) comporte deux jupes de fermeture (17) sur deux côtés opposés, lesdites jupes (17) recouvrant les surfaces externes de deux parois opposées de ladite partie inférieure (1B) du boîtier qui sont transversales à la section de base (2) du chemin de câbles.
